# DEMANDE DE BREVET EUROPEEN

(11) **EP 4 667 297 A1**
(43) Date de publication de la demande: **24.12.2025**
(21) Numéro de dépôt: 25177086.3
(22) Date de dépôt: 16.05.2025
(51) Int. Cl.: B60R 21/02, B60R 22/02, B60R 22/22, B60R 22/24

(54) **CELLULE D'HABITACLE DE VÉHICULE DE LOISIRS DONT UNE PAROI COMPORTE UNE PLAQUE D'ANCRAGE D'UNE CEINTURE DE SÉCURITÉ ET VÉHICULE COMPORTANT UNE TELLE CELLULE**

(30) Priorité: 19.06.2024 FR 2406550
(71) Demandeur: Trigano SpA, 53037 San Gimignano Siena (IT)
(72) Inventeur: GENTILE, Giancarlo, 53036 Poggibonsi (IT); BENASSI, Massimo, 50051 Castelfiorentino (IT); MECHINI, Duccio, 53036 Poggibonsi (IT); VALENTI, Giacomo, 50050 Capraia E Limite (IT)
(74) Mandataire: Novagraaf Technologies

(57) **Abrégé**

L'invention propose une cellule d'habitacle (10) d'un véhicule de loisirs qui comporte un plancher (14) et une cloison verticale ou une paroi verticale (12) et qui est équipée d'une ceinture de sécurité (100) à points d'ancrage multiples, caractérisée en ce qu'une portion de la cloison verticale, ou de la paroi verticale (12) est constituée par un panneau en matériau composite délimité par une face externe (18) et par une face interne (16) et par une planche de support (40) dont une face extérieure (42) est rapportée sur le panneau en matériau composite,
et en ce que ladite portion de la cloison verticale ou de la paroi verticale (12) est équipée d'au moins une première plaque d'ancrage (26) qui est rapportée sur la face extérieure (42) de la planche de support (40) et qui porte un premier élément (32) appartenant à une liaison vis-écrou (32, 34) qui s'étend axialement à travers la planche de support (40) et qui est apte à recevoir le second élément (34) de la liaison vis-écrou (32, 34) qui est solidaire d'un premier composant appartenant à ladite ceinture de sécurité (100) du véhicule.

## Description

### Domaine technique de l'invention

L'invention concerne une cellule d'habitacle d'un véhicule, notamment d'un véhicule de loisirs, qui comporte au moins une plaque d'ancrage pour un composant appartenant à une ceinture de sécurité du véhicule.

L'invention concerne aussi un véhicule, notamment d'un véhicule de loisirs, comportant une telle cellule d'habitacle.

### Arrière-plan technique de l'invention

Une ceinture de sécurité est définie comme étant un assemblage de sangle(s) avec boucle de fermeture, de dispositifs de réglage et de pièces de fixation pouvant être ancré à l'intérieur d'un véhicule à moteur et conçu de manière à réduire le risque de blessures pour l'utilisateur en cas de collision ou de décélération brusque du véhicule, en limitant les possibilités de mouvement du corps de l'utilisateur.

Les différents constructeurs de véhicules automobiles visent à mettre en place des ceintures réglables permettant à chaque passager de les adapter à leur convenance, afin qu'ils puissent notamment bénéficier d'un confort suffisant.

Ainsi, selon une conception désormais répandue, telle que celle illustrée aux figures annexées 1 et 2, une ceinture de sécurité 100 destinée à empêcher qu'une personne attachée ne soit projetée vers l'avant en cas de freinage intense ou de collision est une ceinture dite « à trois points » dont la conception est telle que telle que la charge est reprise en quatre points d'ancrage au châssis ou à la caisse du véhicule dans le cas d'une structure monocoque.

Un premier point d'ancrage 102 est un mécanisme dit « enrouleur » qui est par exemple agencé en partie basse ou inférieure et à partir duquel s'étend la sangle 103 de la ceinture. Ce mécanisme enrouleur 102 assure une fonction de pré-tension de la sangle 103.

Un deuxième point d'ancrage 104 pour l'extrémité libre fixe de la sangle est agencé en partie basse ou inférieure, généralement à proximité du mécanisme enrouleur 102.

Un troisième point d'ancrage supérieur 106, qui est généralement agencé au-dessus du mécanisme enrouleur 102 et du deuxième point d'ancrage 104, est un dispositif de renvoi en forme d'œillet à travers lequel passe la sangle 103.

Le quatrième point d'ancrage 108 est un point inférieur qui comporte une boucle 110 apte à recevoir de manière démontable un pêne 112 qui est monté coulissant le long du brin 114 de la sangle 103 qui s'étend entre le mécanisme enrouleur 102 et l'œillet supérieur de renvoi 106.

En état d'utilisation, la ceinture de sécurité comprend un brin pectoral qui s'étend, depuis l'œillet supérieur de renvoi 106, obliquement sur la poitrine de la personne sanglée, et un brin abdominal qui s'étend depuis le mécanisme enrouleur 102 horizontalement au niveau du bassin de la personne sanglée.

La conception de la ceinture de sécurité et de ses points d'ancrage doit satisfaire aux normes applicables et à des tests correspondants d'homologation ou de conformité.

Ces impératifs sont aisément satisfaits dès lors que l'on a la possibilité d'agencer et de réaliser chaque point d'ancrage par fixation du composant correspondant de la ceinture de sécurité sur une partie ou zone en vis-à-vis du châssis ou de la caisse métallique présentant une rigidité intrinsèque suffisante, ces fixations étant classiquement assurées par des liaisons de type vis-écrou.

Ainsi, de manière connue, chaque point d'ancrage est relié directement au châssis roulant du véhicule.

L'invention vise à proposer une nouvelle conception d'une cellule d'habitacle d'un véhicule, notamment d'un véhicule de loisirs, équipée d'au moins une ceinture de sécurité dont les points d'ancrage ne sont pas reliés structurellement au châssis du véhicule, tout en satisfaisant aux normes et aux tests applicables.

### Résumé de l'invention

L'invention propose une cellule d'habitacle de véhicule automobile, notamment d'un véhicule de loisirs, qui comporte au moins un plancher 14) et une cloison verticale ou une paroi verticale et qui est équipée d'au moins une ceinture de sécurité à points d'ancrage multiples,
caractérisée en ce qu'au moins une portion de la cloison verticale ou de la paroi verticale est constituée :
   - par un panneau en matériau composite délimité par une face externe et par une face interne ;
   - et par une planche de support dont une face extérieure est rapportée sur la face interne du panneau en matériau composite,
ladite portion de la cloison verticale ou de la paroi verticale étant équipée d'au moins une première plaque d'ancrage qui est rapportée sur la face extérieure de la planche de support et qui porte un premier élément appartenant à une liaison vis-écrou qui s'étend axialement à travers la planche de support et qui est apte à recevoir le second élément de la liaison vis-écrou qui est solidaire d'un premier composant appartenant à la ceinture de sécurité du véhicule,
et caractérisée en ce qu'au moins une portion du plancher est constituée :
   - par un panneau en matériau composite délimité par une face inférieure et par une face supérieure ;
   - et par au moins une plaque d'ancrage, qui porte un premier élément appartenant à une liaison vis-écrou dont le second élément est solidaire d'un composant appartenant à la ceinture de sécurité du véhicule, et s'étend axialement à travers la portion du plancher, depuis une face de la plaque d'ancrage qui est en appui contre la face inférieure de la portion du plancher.

Selon d'autres caractéristiques de la cellule d'habitacle :
- la face extérieure de la planche de support est rapportée et fixée par collage dans une zone associée de la face interne du panneau en matériau composite ;
- la zone associée comporte un évidement dans lequel la planche de support est rapportée et fixée par collage ;
- ladite au moins une plaque d'ancrage est rapportée dans un logement complémentaire formé dans la face extérieure de la planche support ;
- au moins une portion de la cloison verticale ou de la paroi verticale est équipée d'au moins une deuxième plaque d'ancrage qui est rapportée sur la face extérieure de la planche de support et qui porte un premier élément appartenant à une liaison vis-écrou qui s'étend axialement à travers la planche de support et qui est apte à recevoir le second élément de la liaison vis-écrou qui est solidaire d'un deuxième composant appartenant à la ceinture de sécurité du véhicule ;
- la ceinture de sécurité est une ceinture de sécurité à au moins trois points de fixation dont chacun est associé à un élément de liaison vis-écrou qui est apte à être reçu dans un premier élément de liaison vis-écrou porté par une plaque d'ancrage rapportée sur la planche de support ;
- chaque plaque d'ancrage est une plaque métallique, notamment en acier ;
- chaque premier élément appartenant à une liaison vis-écrou est une douille taraudée apte à recevoir une tige filetée appartenant à un second élément de la liaison vis-écrou ;
- chaque panneau en matériau composite comporte une structure en sandwich ;
- chaque panneau en matériau composite comporte une structure en sandwich comportant une peau externe, en bois contreplaqué, en fibre de verre ou en aluminium et une peau interne, en fibre de verre ou en aluminium qui entourent un noyau appartenant à la catégorie de matériaux comportant le polystyrène expansé ou extrudé, le polyuréthane, le polytéréphtalate d'éthylène, le polychlorure de vinyle, en polypropylène micro cellulaire ;
- la planche de support est une planche en bois contreplaqué.

L'invention propose aussi un véhicule qui comporte un châssis roulant, caractérisé :
- en ce qu'il est équipé d'une cellule d'habitacle selon l'invention qui est équipée de la au moins une ceinture de sécurité à points d'ancrage multiples ;
- et en ce qu'aucun des points d'ancrage multiples n'est relié directement au châssis roulant.

Selon une autre caractéristique du véhicule, le châssis roulant porte une batterie d'accumulateurs électriques agencée en-dessous d'une zone d'assise qui est aménagée à l'intérieur de la cellule d'habitacle et qui est équipée de la au moins une ceinture de sécurité à points d'ancrage multiples.

### Brève description des Figures

[Fig.1] - la [Fig.1] est une vue en perspective illustrant une partie d'une cellule d'habitacle d'un véhicule de loisirs comportant une ceinture de sécurité à quatre points d'ancrage réalisés selon les enseignements de l'invention ;

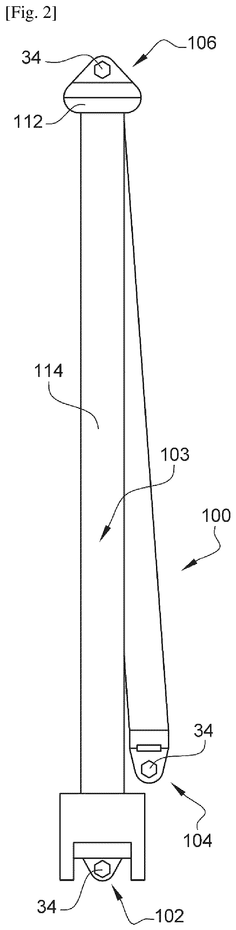

[Fig.2] - la [Fig.2] est une vue de détail illustrant en élévation les trois points d'ancrage agencés dans une paroi verticale latérale de la cellule d'habitacle de la [Fig.1] ;

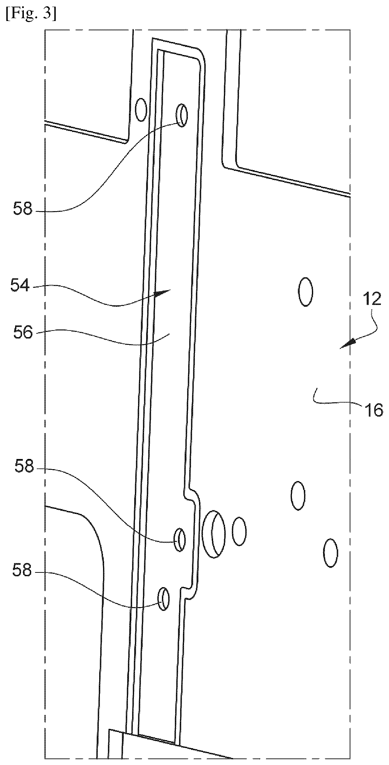

[Fig.3] - la [Fig.3] est une vue de détail de la zone de la paroi latérale comportant le logement dans lequel est reçue la planche support des plaques d'ancrage ;

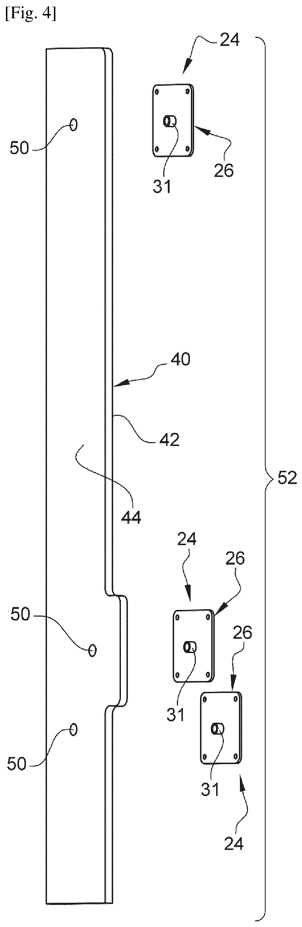

[Fig.4] - la [Fig.4] est une vue en perspective éclatée de la planche support et de ses trois plaques d'ancrage associées ;

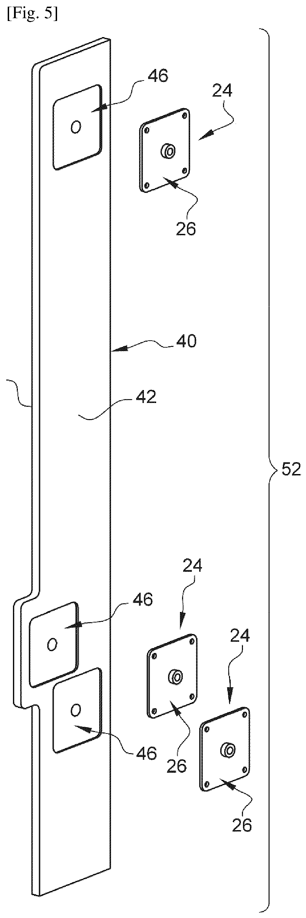

[Fig.5] - la [Fig.5] est une vue analogue à celle de la [Fig.4] selon un autre angle de vue en perspective ;

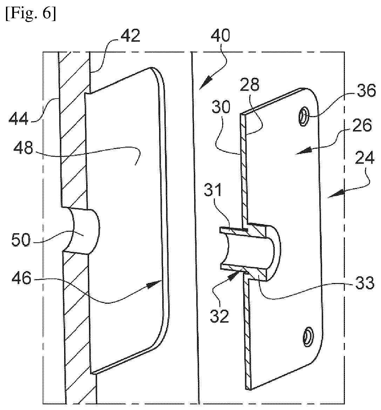

[Fig.6] - la [Fig.6] est une vue de détail en coupe par un plan vertical et transversal de la partie supérieure de l'ensemble illustré à la [Fig.5] ;
[Fig.7] - la [Fig.7] est une vue de détail illustrant, en coupe par un plan vertical et transversal, du quatrième point inférieur d'ancrage comportant une boucle apte à recevoir le pêne coulissant de la ceinture de sécurité ;

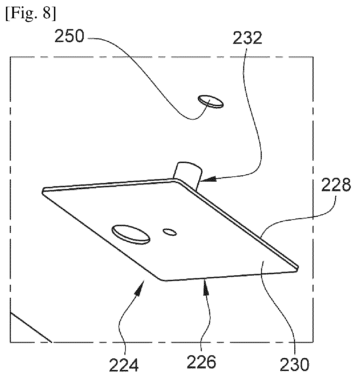

[Fig.8] - la [Fig.8] est une vue de détail de dessous et en perspective éclatée illustrant la plaque d'ancrage et la portion associée du plancher.

### Description détaillée des Figures

Pour la description de l'invention et la compréhension des revendications, on adoptera à titre non limitatif les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant selon la direction de roulage du véhicule en marche avant et l'axe transversal est orienté de la gauche vers la droite en considérant l'orientation du conducteur en position assise de conduite sur le siège avant prévu à cet effet dans la partie avant.

Dans la description qui va suivre, des éléments identiques, similaires ou analogues seront désignés par les mêmes chiffres de référence.

De manière connue, un véhicule de loisirs comporte un châssis roulant motorisé comportant une plateforme arrière sur laquelle est montée une cellule d'habitacle qui se présente globalement sous la forme d'une « boîte » constituée notamment de plusieurs parois et cloisons verticales ainsi que d'un plancher et d'un toit ou pavillon, ces différents composants étant généralement réalisés sous la forme d'un assemblage de panneaux en matériau(x) composite(s).

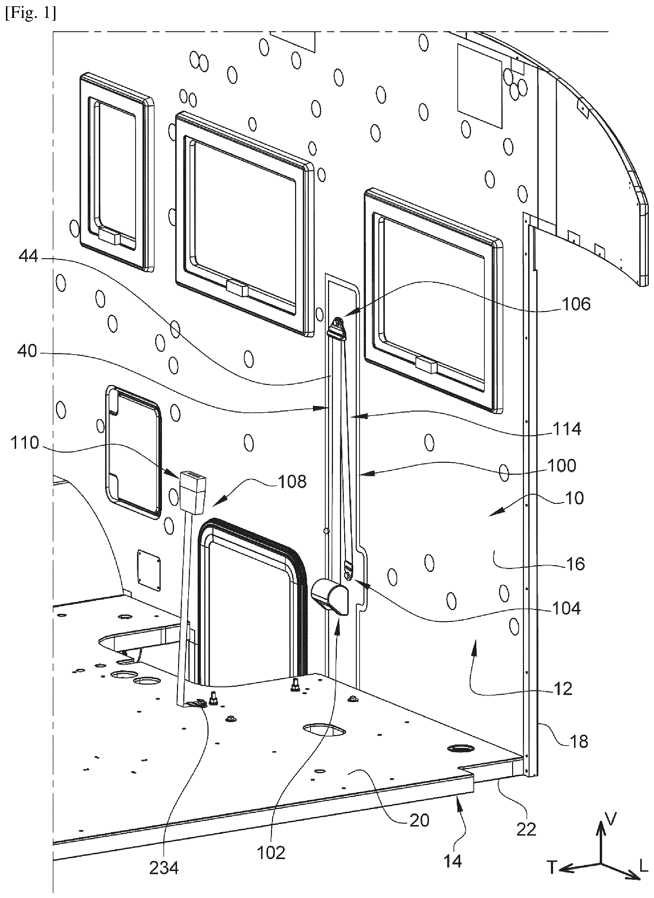

On a représenté à la [Fig.1] une partie d'une paroi latérale, verticale et longitudinale, de gauche 12 d'une cellule d'habitacle 10 ainsi qu'une partie adjacente d'un plancher 14.

La paroi verticale 12 est un panneau en matériau composite délimité par une face interne 16 et une par une face externe 18, tandis que le plancher est un panneau en matériau composite délimité par une face supérieure 20 et par une face inférieure 22.

La zone de la cellule d'habitacle 10 délimitée par la paroi 12 et le plancher 14 est aménagée sous la forme d'une zone d'assise comportant des éléments d'assise (non représentés), tels que par exemple des sièges individuels ou une banquette.

Pour assurer la sécurité du ou des occupant(s) de la zone d'assise lors du roulage du véhicule, il est prévu une ceinture de sécurité pour chaque occupant.

On a représenté à la [Fig.1] un ensemble de ceinture de sécurité 100 susceptible d'être utilisée par une personne assise adjacente à la paroi verticale 12.

L'ensemble de ceinture de sécurité 100 est ici une ceinture dite « à trois points » et comportant quatre points d'ancrage telle que décrite en préambule.

Les trois points d'ancrage 102, 104 et 106 sont agencés latéralement et sont intégrés à une portion de la cloison verticale 12.

A cet effet, chaque point d'ancrage comporte notamment une « bride » métallique d'ancrage 24 qui est ici constituée d'une plaque d'ancrage 26 délimitée par une face extérieure 28 et par une face intérieure 30, et d'une douille taraudée 32 qui s'étend axialement orthogonalement au plan de la plaque d'ancrage 26, ici de part et d'autre de chacune de ses deux faces intérieure 30 et extérieure 28.

Pour chaque point d'ancrage, la douille taraudée 32 constitue l'écrou d'une liaison vis-écrou dont l'autre élément est par exemple la tige filetée d'un boulon ou une vis complémentaire 34.

Chaque plaque d'ancrage 26 comporte aussi quatre trous 36 agencés à sa périphérie dont chacun est apte à recevoir une vis de fixation.

La conception de chacune des trois brides d'ancrage intégrées à la portion de la cloison verticale 12 est identique et elles sont désignées par les mêmes références.

Pour être rapportée et fixée sur la cloison verticale 12 et pour assurer la tenue et la résistance de chaque point d'ancrage, chaque bride d'ancrage 24 est rapportée sur une planche de support 40 qui, à titre non limitatif, est ici une planche de support commune aux trois brides d'ancrage 24.

La planche de support 40 est ici de forme globalement rectangulaire d'élongation verticale et elle est délimitée par une face extérieure 42 et une face intérieure 44.

Pour le positionnement et le montage de chaque bride d'ancrage 24, dans sa face extérieure 42, la planche de support 40 comporte un logement 46 de forme et de dimension complémentaire de celles de la plaque d'ancrage 26.

La profondeur du logement 46 est supérieure à l'épaisseur de la plaque d'ancrage 26.

Le fond 48 de chaque logement 46 comporte un trou débouchant 50 apte à recevoir axialement la partie 31 de la douille taraudée 32 qui s'étend axialement au-delà de la face intérieure 30 de la plaque d'ancrage 26.

Avec les trois brides d'ancrage 24, la planche de support 40 constitue un « module » 52 apte à être rapporté et fixé dans la paroi verticale 12.

A cet effet, de manière non limitative, il est possible d'assurer un maintien en position de chaque bride d'ancrage sur la planche de support 40 au moyen d'une ou plusieurs vis de fixation (non représentées) reçue(s) dans un ou plusieurs trous 36.

A titre non limitatif, la zone de la face interne 16 de la paroi verticale 12 dans laquelle est rapporté et fixé le module 52 comporte un évidement 54 dans lequel la planche de support 40 est rapportée et fixée.

Le fond 56 de l'évidement 54 est une surface plane verticale dans laquelle sont formés trois trous horizontaux 58 dont chacun est apte à recevoir la partie 33 de la douille taraudée 32 qui s'étend axialement au-delà de la face extérieure 28 de la plaque d'ancrage 26.

La fixation de la planche de support 40, et donc du module 52, est réalisée par collage de la totalité ou quasi-totalité de l'aire de la surface de la face extérieure 42 sur la surface plane du fond 56 de l'évidement 54.

Ainsi, la retenue et résistance aux efforts éventuellement appliquée aux points d'ancrage 102, 104, 106 est transmise à la planche de support 40 qui est elle-même rapportée et fixée à la paroi verticale 12.

Le quatrième point d'ancrage 108 inférieur qui comporte la boucle 110 est intégré au plancher 14.

A cet effet, comme pour chacun des trois premiers points d'ancrage qui viennent d'être décrits, le quatrième point d' ancrage 108 comporte une « bride » métallique d'ancrage 224 qui est ici constituée d'une plaque d'ancrage 226 délimitée par une face supérieure 228 et par une face inférieure 230, et d'une douille taraudée 232 qui s'étend axialement orthogonalement au plan de la plaque d'ancrage 226, ici vers le haut à partir de sa face supérieure 228.

La douille taraudée 232 constitue l'écrou d'une liaison vis-écrou dont l'autre élément est par exemple la tige filetée d'un boulon ou une vis complémentaire 234.

La portion du plancher 14 sur laquelle est fixée la plaque d'ancrage 224 comporte un trou vertical débouchant 250 apte à recevoir axialement la douille taraudée 232.

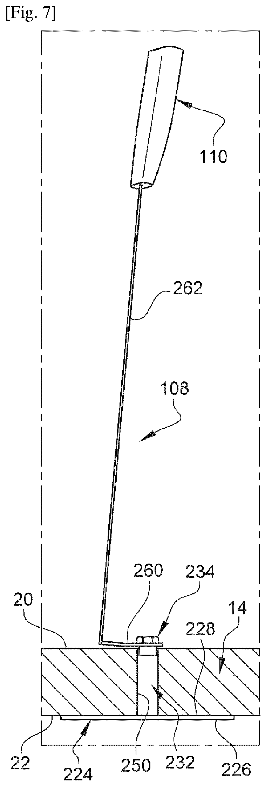

Comme illustré à la [Fig.7], en position montée et fixée de la bride d'ancrage 224, la face supérieure 228 est en appui axialement vers le haut contre une portion en vis-à-vis de la face inférieure 22 du plancher 14.

Dans l'exemple illustré à titre non limitatif, le boulon 234 vissé dans la douille 232 retient une plaquette de fixation.

A titre non limitatif, selon un exemple de réalisation de l'invention, pour ses performances mécaniques, la planche de support 40 est réalisée en bois contreplaqué.

A titre non limitatif, selon un exemple de réalisation de l'invention, chaque panneau en matériau composite comporte une structure en sandwich comportant une peau externe en fibre de verre (dont l'épaisseur est comprise entre 1mm et 1,5mm) et une peau interne en fibre de verre (dont l'épaisseur est comprise entre 1mm et 1,5mm) qui entourent un noyau en polystyrène extrudé (dont l'épaisseur est égale à environ 27mm)

Du fait de la réalisation de l'évidement 54 dans la face intérieure 16 de la paroi verticale 12, son fond 56 est formé dans le matériau constitutif du noyau et le collage de la planche de support 40 est réalisé entre la face extérieure 42 du bois contreplaqué et le fond 56 appartenant au noyau en polystyrène extrudé.

Le concept selon l'invention a été illustré et décrit en référence à l'équipement d'une place assise adjacente à une paroi verticale ou une cloison verticale dans laquelle le module d'ancrage 52 est rapporté.

Dans l'hypothèse dans laquelle cette place assise appartient à une banquette à deux places assises, l'autre place assise peut être équipée de la même manière d'une autre ceinture de sécurité avec notamment un autre module d'ancrage rapporté et collé sur un montant vertical adjacent à la banquette, ce montant pouvant, si nécessaire, être renforcé par exemple par une plaque de renfort, par exemple métallique.

## Revendications

1. Cellule d'habitacle (10) de véhicule automobile, notamment d'un véhicule de loisirs, qui comporte au moins un plancher (14) et une cloison verticale ou une paroi verticale (12) et qui est équipée d'au moins une ceinture de sécurité (100) à points d'ancrage multiples (102, 104, 106),
**caractérisée en ce qu'**au moins une portion de la cloison verticale ou de la paroi verticale (12) est constituée :
- par un panneau en matériau composite délimité par une face externe (18) et par une face interne (16) ;
- et par une planche de support (40) dont une face extérieure (42) est rapportée sur ladite face interne (16) du panneau en matériau composite,
ladite portion de la cloison verticale ou de la paroi verticale (12) étant équipée d'au moins une première plaque d'ancrage (26) qui est rapportée sur la face extérieure (42) de la planche de support (40) et qui porte un premier élément (32) appartenant à une liaison vis-écrou (32, 34) qui s'étend axialement à travers la planche de support (40) et qui est apte à recevoir le second élément (34) de la liaison vis-écrou (32, 34) qui est solidaire d'un premier composant appartenant à ladite ceinture de sécurité (100) du véhicule,
et **caractérisée en ce qu'**au moins une portion du plancher (14) est constituée :
- par un panneau en matériau composite délimité par une face inférieure (22) et par une face supérieure (20) ;
- et par au moins une plaque d'ancrage (226), qui porte un premier élément (232) appartenant à une liaison vis-écrou (232, 234) dont le second élément (234) est solidaire d'un composant appartenant à ladite ceinture de sécurité (100) du véhicule, et s'étend axialement à travers ladite portion du plancher (14), depuis une face (228) de ladite plaque d'ancrage (226) qui est en appui contre la face inférieure (22) de ladite portion du plancher (14).

2. Cellule d'habitacle (10) de véhicule automobile, notamment d'un véhicule de loisirs, selon la revendication précédente, **caractérisée en ce que** ladite face extérieure (42) de la planche de support (40) est rapportée et fixée par collage dans une zone associée de ladite face interne du panneau en matériau composite.

3. Cellule d'habitacle (10) selon la revendication précédente, **caractérisée en ce que** ladite zone associée comporte un évidement dans lequel la planche de support (40) est rapportée et fixée par collage.

4. Cellule d'habitacle (10) de véhicule automobile, notamment d'un véhicule de loisirs, selon la revendication 2, **caractérisée en ce que** ladite au moins une plaque d'ancrage (26) est rapportée dans un logement complémentaire formé dans ladite face extérieure de la planche support.

5. Cellule d'habitacle (10) de véhicule automobile, notamment d'un véhicule de loisirs, selon l'une quelconque des revendications 1 à 4, **caractérisée en ce qu'**au moins une portion de la cloison verticale ou de la paroi verticale (12) est équipée d'au moins une deuxième plaque d'ancrage (26) qui est rapportée sur la face extérieure (42) de la planche de support (40) et qui porte un premier élément (32) appartenant à une liaison vis-écrou (32, 34) qui s'étend axialement à travers la planche de support (40) et qui est apte à recevoir le second élément (34) de la liaison vis-écrou (32, 34) qui est solidaire d'un deuxième composant appartenant à ladite ceinture de sécurité (100) du véhicule.

6. Cellule d'habitacle (10) de véhicule automobile, notamment d'un véhicule de loisirs, selon la revendication précédente, **caractérisée en ce que** ladite ceinture de sécurité (100) est une ceinture de sécurité (100) à au moins trois points de fixation (102, 104, 106) dont chacun est associé à un élément de liaison vis-écrou (32, 34) qui est apte à être reçu dans un dit premier élément (32) de liaison vis-écrou (32, 34) porté par une plaque d'ancrage (26) rapportée sur ladite planche de support (40).

7. Cellule d'habitacle (10) de véhicule automobile, notamment d'un véhicule de loisirs, selon l'une quelconque des revendications précédentes, **caractérisée en ce que** chaque plaque d'ancrage (26, 226) est une plaque métallique, notamment en acier.

8. Cellule d'habitacle (10) de véhicule automobile, notamment d'un véhicule de loisirs, selon l'une quelconque des revendications précédentes, **caractérisée en ce que** chaque dit premier élément (32, 232) appartenant à une liaison vis-écrou (32-34, 232-234) est une douille taraudée apte à recevoir une tige filetée appartenant à un dit second élément (34, 234) de la liaison vis-écrou.

9. Cellule d'habitacle (10) de véhicule automobile, notamment d'un véhicule de loisirs, selon l'une quelconque des revendications précédentes, **caractérisée en ce que** chaque panneau en matériau composite comporte une structure en sandwich.

10. Cellule d'habitacle (10) de véhicule automobile, notamment d'un véhicule de loisirs, selon la revendication précédente, **caractérisée en ce que** chaque panneau en matériau composite comporte une structure en sandwich comportant une peau externe, en bois contreplaqué, en fibre de verre ou en aluminium et une peau interne, en fibre de verre ou en aluminium qui entourent un noyau en polystyrène expansé ou extrudé, ou en polyuréthane, ou en polytéréphtalate d'éthylène, ou en polychlorure de vinyle, ou en polypropylène micro cellulaire.

11. Cellule d'habitacle (10) de véhicule automobile, notamment d'un véhicule de loisirs, selon l'une quelconque des revendications précédentes, **caractérisée en ce que** ladite planche de support (40) est une planche en bois contreplaqué.

12. Véhicule automobile qui comporte un châssis roulant, **caractérisé :**
- **en ce qu'**il est équipé d'une cellule d'habitacle (10) selon l'une quelconque des revendications précédentes qui est équipée de ladite au moins une ceinture de sécurité (100) à points d'ancrage multiples (102, 104, 106, 108) ;
- et **en ce qu'**aucun desdits points d'ancrage multiples n'est relié directement audit châssis roulant.

13. Véhicule automobile selon la revendication précédente, **caractérisé en ce que** ledit châssis roulant porte une batterie d'accumulateurs électriques agencée en-dessous d'une zone d'assise qui est aménagée à l'intérieur de ladite cellule d'habitacle (10) et qui est équipée de ladite au moins une ceinture de sécurité (100) à points d'ancrage multiples.
